(19) Europäisches Patentamt
European Patent Office
Office européen des brevets

(11) Publication number: **0 460 860 A1**

(12) # EUROPEAN PATENT APPLICATION

(21) Application number: **91304864.1**

(22) Date of filing: **29.05.91**

(51) Int. Cl.[5]: **G11B 7/095**, G11B 7/09, G11B 7/00

(30) Priority: **04.06.90 US 532782**
**19.10.90 US 636871**

(43) Date of publication of application:
**11.12.91 Bulletin 91/50**

(84) Designated Contracting States:
**DE FR GB IT NL**

(71) Applicant: **International Business Machines Corporation**
**Old Orchard Road**
**Armonk, N.Y. 10504 (US)**

(72) Inventor: **Childers, Edwin Ralph**
**8341 East Brookwood Drive**
**Tucson, Arizona 85715 (US)**
Inventor: **Fennema, Alan August**
**2705 North LaVerne**
**Tucson, Arizona 85712 (US)**
Inventor: **McReynolds, David Paul**
**9641 East Hickory**
**Tucson, Arizona 85749 (US)**

(74) Representative: **Atchley, Martin John Waldegrave**
**IBM United Kingdom Limited Intellectual Property Department Hursley Park**
**Winchester Hampshire SO21 2JN (GB)**

(54) **Rotatable work tool assembly.**

(57) The present invention relates to a rotatable work tool assembly comprising a rotatable body (13), a fixed holder for the body, a work tool (22) mounted on the body, a pivot pin (21) extending from the holder, and a recess (20A) within the body adapted to receive the pivot pin so that the body can rotate about the pivot pin relative to the holder and the work tool can move into a selected work position.

According to the invention the assembly is characterized in that it comprises biasing means for applying a biasing force to the body in a direction along a line extending from the axis of the pivot pin to the work tool for all positions of the body as it rotates so as to tend to prevent any movement of the body relative to the pivot pin along the line due to spacing between the outer surface of the pivot pin and the inner surface of the recess.

FIG. 2

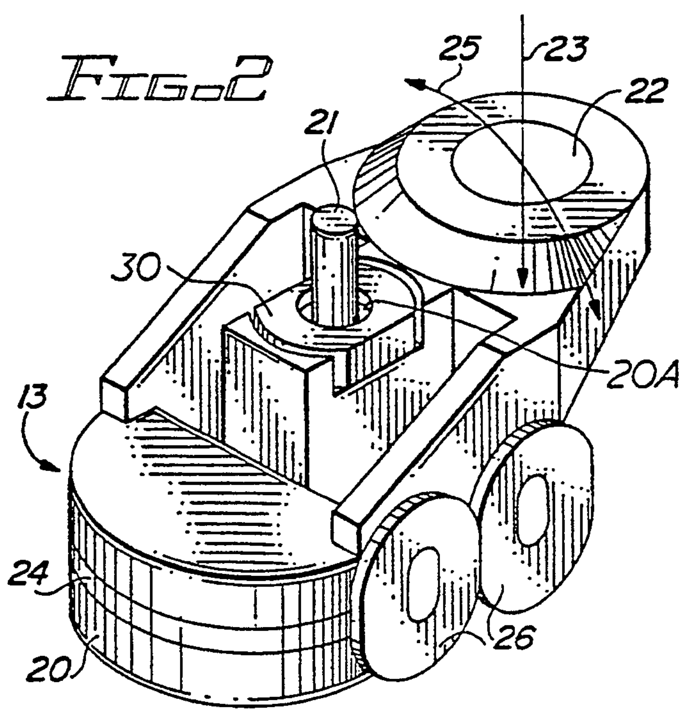


EP 0 460 860 A1

The present invention relates to a rotatable work tool assembly including a rotatable body and work tool which rotates about a fixed pivot and for which vibrations and wobble relative to the pivot are to be controlled. In particular, the invention is applicable to optical disk recorders in which an objective lens (work tool) is mounted for movement in focus and track following/seeking directions on a rotatable actuator (lens holder).

Optical disk recorders have often employed rotatable lens holders in which the lens is axially moveable in the holder along the optical axis of the lens. Such motions enable focusing operations to occur using the objective lens. Further, the rotational motion of the lens holder enables the lens to be moved from a record track to an adjacent record track or a plurality of such record tracks by a track seek operation, as is known. Such a lens holder is usually located on a head carriage, also termed a coarse actuator, in which an upstanding pin slidably and rotatably receives a lens holder. In optical disk recorders, because of extremely high track density and lineal recording densities, any tolerances between the upstanding pivot pin and the lens holder cause vibration and introduce an independent variable which has to be accommodated by servo circuits. In many instances, the wobbling or other action of the rotatable lens holder (also termed actuator) relative to the head or transducer carriage becomes significant at track spacings of about one micron and with a substantial linear density in which the cells are a micron or less in length along the track.

Similar problems occur in other recorders such as so-called hard disk recorders in which the magnetic transducer (work tool) is rotatably mounted for track crossings and for track seekings. As the track densities of such hard magnetic hard disks increase the sensitivity to the tolerances of the pivoting rotatable support becomes more and more critical. It is desired to provide a simple and efficient control of the relationship between a rotatable actuator or transducer holder (also termed work tool holder) and its support whether it be on a head carriage or on a frame of a device that uses such a rotatable actuator.

US -A- 4,687,296 shows a rotatable objective lens holder for use in an optical disk recorder environment. An elastic press member is connected on the frame supporting the rotatable actuator/lens holder such that, as the lens holder pivots or rotates, the press member is distorted for removing vibration in the track following or seeking direction, i.e., in a direction perpendicular to the optical axis of the objective lens. The elastic press member (as best seen in Fig. 5 of this specification) also elastically pulls the rotatable lens holder against a pivot pin about which it rotates. According to the specification, the elastic press member reduces the vibration in the tracking direction i.e., rotational motion of the objective lens holder. The force exerted by the elastic press member on the rotatable lens holder changes as the lens holder rotates about the centre pivot pin such that the force on the pivot pin by the rotatable objective lens holder appears to be in a constant position on the pin as opposed to following the rotation of the lens holder as it rotates about the pin i.e., the force of the elastic press member does not follow the rotation of the objective lens holder. Therefore it does not provide a constant force on an axis between the pivot axis of the pin and the optical axis of the lens.

US -A- 4,638,471 shows a focus control of an objective lens having two sets of magnet coils wherein the signals have the same amplitude and frequency but are in phase opposition for causing the objective lens to be tilted periodically about one of the two axes transverse to the optical axis of the radiation beam. This specification shows a plurality of signals and a phase relationship of superposed signals for controlling an objective lens. Functions provided by this arrangement are quite different from that taught and claimed in the present application. A similar arrangement in US -A- 4,773,055 shows a first coil which causes axial motion of the objective lens while a second coil causes tilting motion of the objective lens. There. is no control shown here which relates to controlling the relationship between a pivot pin and a rotatable actuator.

US -A- 4,482,988 shows a rotatable lens carrier/actuator of an optical disk device which has both focusing and tracking/seeking coils on the rotatable actuator. This specification does not show urging a rotatable member against a pivot pin as described in the present application.

US -A- 4,386,823 shows magnetic coils positioning an objective lens in a rectangular mount. This specification shows another arrangement for controlling an objective lens.

US -A- 4,861,138 shows a rotatable actuator for an optical disk recorder in which the rotatable actuator rotates about and axially slides upon a support pin. This specification uses a particular magnet/coil arrangement and does not suggest how to accommodate tolerances between a pivot pin and its supported rotatable actuator.

US -A- 4,838,649 shows another rotatable actuator pivotally mounted about a pivot pin and having an objective lens offset from the pivot pin with an optical axis parallel to the pivot pin pivot axis. This specification teaches putting the centre of gravity of the rotatable actuator at the pivot axis and a spring member which has high rigidity to the translation in the tracking direction (transverse to the optical axis and pivot axis) and low rigidity to rotation in a plane intersecting the slide shaft at right angles.

US -A- 4,862,441 shows another optical disk objective lens actuator/holder carried on a linearly translatable coarse actuator or transducer carriage.

US -A- 4,799,766 shows the positioning of an objective lens in both the focusing and tracking directions using only magnetic levitation.

US -A- 4,557,564 shows a rotatable actuator in Fig. 6 which does not provide the operation described in the present application but does show a rotatable actuator as used not only in optical disk but also in the hard disk referred to in US -A- 4,799,766.

The object of the present invention is to provide an improved rotatable work tool assembly.

The present invention relates to a rotatable work tool assembly comprising a rotatable body, a fixed holder for the body, a work tool mounted on the body, a pivot pin extending from the holder, and a recess within the body adapted to receive the pivot pin so that the body can rotate about the pivot pin relative to the holder and the work tool can move into a selected work position.

According to the invention the assembly is characterised in that it comprises biasing means for applying a biasing force to the body in a direction along a line extending from the axis of the pivot pin to the work tool for all positions of the body as it rotates so as to tend to prevent any movement of the body relative to the pivot pin along the line due to spacing between the outer surface of the pivot pin and the inner surface of the recess.

In order that the invention may be more readily understood an embodiment will now be described with reference to the accompanying drawings, in which:

Fig. 1 is an abbreviated diagrammatic showing of an optical disk device in which an assembly in accordance with the present invention may be employed,

Fig. 2 illustrates a rotary actuator/lens holder with which an assembly in accordance with the present invention may be employed and which is rotatably and slidable mounted on a pivot pin,

Fig. 3 is a simplified plan view of the Fig. 2 rotary actuator and shows the relationship of coils with permanent magnets to provide movement of the actuator,

Fig. 4 is a block diagram showing the functional aspects of a control system utilised in the rotary actuator illustrated in Figs. 2 and 3,

Fig. 5 shows an alternative form of the control system which can be used in the rotary actuator illustrated in figs. 2 and 3,

Fig. 6 is a simplified circuit diagram of a practical circuit for the control system in Fig. 4, and

Fig. 7 is a simplified circuit diagram of another form of control circuit.

Referring now more particularly to the appended drawings, like numerals indicate like parts and structural features in the various figures. As illustrated in Fig. 1 an optical disk 10 for recording data rotates in the direction of arrow 11 about its rotational axis 12. Disk 10 is suitably mounted for rotation on a suitable electric motor (not shown). A fine actuator 13 is mounted on the distal end of head carriage 15. Head carriage 15 is controlled by device control 14 and is movable on the frame (not shown) of the apparatus in a usual manner. Fine actuator 13 in the illustrated embodiment carries a working tool 22 (see Fig. 2). Working tool 22 can be a magnetic transducer, optical mirror, objective lens, or other work performing element. The discussion hereafter refers to working tool 22 as an objective lens 22. Fine actuator 13 carries objective lens 22 in a manner for enabling focusing actions i.e., motions towards and away from disk 10 along the optical axis of the objective lens, and for track following and seeking by rotational motion in a plane orthogonal to the optical axis 23 of lens 22, as represented by arrow 25 (Fig. 2). Arrow 25 extends substantially radially of disk 10 for crossing a series of recording tracks on the disk. Additionally, head carriage 15 is radially movable for locating fine actuator 13 in a predetermined radial area of disk 10.

Referring now more particularly to Figs. 2 and 3, a pivot pin 21 is mounted on head carriage 15 which is a support frame for fine actuator 13. Fine actuator 13 includes a body 20, preferably moulded and having a beam shape which is off-set for enabling the lens 22 to be inserted into a disk cartridge (not shown). A focusing coil 24 extends around the pivot pin 21 on body 20. Two pairs of tracking coils 26 are disposed on opposite sides of the body 20, as best seen in Fig. 3. A pair of magnets 28 are mounted in an upstanding manner on head carriage 15 to be in close magnetic association with the tracking coils 26 and the focus coil 24.

The body 20 is formed with a cylindrical hole 20A adapted to receive the pivot pin 21 for enabling the fine actuator 13 to rotate about the pivot pin 21 and slide axially thereon about its pivot axis which is the centre axis of pin 21. For some applications, a hardened insert 30 mounted on body 20 forms a slide bearing about pivot pin 21. Because of the tight tolerances involved, any space 31 between pivot pin 21 and the wall of the hole 20A or of the hardened bearing insert 30 can cause unintended wobble or vibration of body 20 with respect to pivot pin 21. It is desired to minimise these motions in an inexpensive and effective manner.

In accordance with the invention, the coils 26 are not only used for imparting rotational motion to fine actuator 13, but are also used to provide a bias magnetic field by a bias current flowing therethrough for producing the magnetic forces indicated by arrows 32. Such magnetic forces tend to move the body 20 in the direction of the arrows 32 so as to press the body 20 against pivot pin 21 at a point lying on the line 33 which goes through the centre axis of pin 21 and through the optical axis 34 of lens 22.

It should be noted that the bias magnetic forces

represented by arrows 32 are superposed upon the magnetic forces 36, 37 generated by tracking coils 26 and magnets 28 for effecting rotational motion of actuator 13. The control electrical currents flowing through coils 26 operate to produce forces that are in the same rotational sense. That is, to rotate body 20 counterclockwise (as viewed in Fig. 3), magnetic forces represented by arrows 36 and 37 cause a reaction between the body 20 and magnets 28. For clockwise rotation (as viewed in Fig. 3), the magnetic forces represented by arrows 36 and 37 are reversed. In this regard, it should be noted that the bias magnetic forces, represented by arrows 32 are in opposite rotational senses, such that no rotational effect is imposed upon the fine actuator 13 by these bias magnetic forces.

Superposing the rotation causing magnetic forces 36, 37 with the bias forces 32 effects a superposition of the forces for maintaining the bias forces 32 to effect contact between body 20 and pin 21 always on line 33. Therefore, as body 20 rotates, the biasing forces follow the rotation as the body 20 rotates or pivots about pin 21. This arrangement maintains the biasing forces for keeping the pin 21 and body 20 together along line 33. Whether it be on the side of pin 21 closest to lens 22 or on the opposite side is of no consequence. This arrangement also provides for a maximum balance in the fine rotatable actuator 13. It is understood that the magnets 28 can alternatively be mounted on the actuator 13 with the coils 26 mounted on support 15.

The winding direction of the coils 26 and the direction of currents flowing therein determine the direction of rotation and the direction of bias forces produced. Since this relationship is understood and is a design matter, it is not further discussed. Fig. 4 shows a functional representation of a circuit for generating the forces described with respect to Fig. 3 while Fig. 6 shows a constructed embodiment of such a circuit. The coils 26 are arranged to produce magnetic forces for rotating the body 20 as indicated by the arrows 36 and 37 as described above when the electrical currents flowing therethrough are as represented by currents 40 and 41. Reversing the coil winding directions would cause a reversal of current direction. In the Fig. 4 illustration, the current directions represented by arrows. 40 and 41 generate the oppositely directed magnetic forces 36 an 37 for effecting rotational torque on fine actuator 13. In contrast, to generate the bias magnetic forces, represented by arrows 32, the current has to flow in the directions as represented by arrows 42 canal 43. The generation of the currents flowing through the coils 26 from coil ends 50 and 51 as illustrated uses analog sum circuits 55 and 56. A track following and seeking circuit 52 receives control signals from device control 14 as represented by arrow 53. It supplies control signal to analog sum circuits 55, 56 to supply currents 40 and 41 to coil ends 50 and 51, respectively, for the coils 26 for effecting rotation of the actuator 13. In addition, bias circuit 57, for generating currents 42 and 43 to produce the bias force 32, is connected to the ends 50 and 51 of the coils 26 via the analog sum circuits 55 and 56, respectively, which causes superposition of the electrical currents in the two coils 26.

Although a best mode of practising the present invention is to use the tracking coils for both sets of currents as showns in Fig. 4 and 6, separate coils for the bias circuit current can be provided if desired. As best seen in Fig. 5, tracking and seeking circuit 52 is directly connected to coils 26 for providing the rotation effecting magnetic forces. The bias circuit 57 instead of being connected to coils 26 is connected to an additional set of bias coils 61 which can be interwound with coils 26 for providing the bias magnetic force represented by arrows 32.

Fig. 6 is a simplified schematic diagram of the circuit illustrated in Fig. 4. The pair of tracking coils 26 have a common connection to a reverse signal amplifier 59 which is controlled by the summing amplifier circuits 55 and 56. The bias circuit 57 is a variable battery (DC) source applied to summing amplifier 55 at its current summing node 60, its active input. The second input to the summing amplifier 55 is a reference signal source 61. The second input to current summing node 60 is the track/seek drive signal on line 63 received from track following and seeking circuit 52. While Fig. 4 shows circuit 52 supplying differential signals to summing amplifiers 55 and 56, the Fig. 6 embodiment uses a single input. The differential signal action is effected through differential amplifier 65 of summing amplifier 56. In summing amplifier 56, rather than summing the bias signal with the tracking/seeking signal at a signal summing node 60, differential amplifier receives the bias signal at one input and the line 63 tracking and seeking signal at its second or differential input for subtracting the two received signals. The output signals of amplifiers 55 and 56 are supplied not only to the extreme connections of coils 26, but also to a summing node 67 in reverse signal amplifier 59. This connection controls amplifier 59 such that reverse currents flow in the two coils 26 for seeking and tracking and such that the bias signal input to both amplifiers 55 and 56 causes current flow in the coils to produce the forces 32 while the seeking/tracking signal on line 63 results in magnetic forces 36 and 37. Note that in fig. 6 the centre connection 70 of coils 26 is not grounded as in Fig. 4. Amplifier 59 enables higher amplitude opposing voltages at the coil extremities resulting in faster tracking action. The analog sum circuits 55 and 56 of Fig. 4 include active amplifiers similar to the Fig. 6 illustrated circuits. Other circuit arrangements can be employed, as desired.

Fig. 7 shows an energy efficient version of the circuits illustrated in Figs. 4 and 6. Instead of applying a separate bias current to the tracking coils 26, the positioning currents from the tracking and seeking circuits 52 bias body 20 against pivot pin 31. This arrangement eliminates a need for bias circuit 57 and sum circuits 55 and 56. The same desired orientation of the bias, i.e. the bias force follows the rotation of the rotor body 20, is maintained. In the first-described embodiment (see Figs. 4 and 6), the positioning currents in the two tracking coils are equal resulting in no net biasing of the body 20 against pivot pin 31. The circuit of Fig. 7 provides for one tracking coil to provide more of the rotation-inducing torque and simultaneously to bias the body 20 against pivot pin 31.

A pair of Zener diodes 71 and 72 connect the tracking coils 26C (rotate body 20 clockwise) and 26CC (rotate body 20 counterclockwise) respectively to servo circuits 52. For clockwise rotation of body 20, the torque-inducing current flows through coil 26C for producing the rotation force and the side bias force pushing body 20 against pivot pin 31. For counterclockwise rotation of body 20, the torque-inducing current flows through coil 26CC to produce both the rotation and side bias forces. Hence, all torque is provided by one of the two tracking coils 26C or 26CC. Since the coils are oppositely poled, the reverse direction currents produce side biasing forces in the same direction.

The Zener diodes 71, 72 limit the side bias forces. Whenever the drive signal exceeds the reverse current-conducting threshold of the Zener diodes, the non-conducting Zener diode begins to conduct diverting current from the forward-conducting Zener diode. The current flowing through the reverse-conducting Zener diode opposes the bias force thereby limiting the side bias. Such limiting limits the frictional effects between the body 20 and pivot pin 31. That is, when diode 71 is forward conducting, coil 26C is providing both the rotation-inducing torque and the side bias force to body 20; coil 26CC has no current flow. When the reverse current-condition threshold of Zener diode 72 is exceeded, it begins to conduct current supplying a current through coil 26CC which opposes the bias and torque forces created by coil 26C current.

When diodes 71 and 72 are selected to be other than Zener diodes, then the reverse current threshold is not provided. Such an arrangement means that more side bias forces can be applied. Such an arrangement can be useful when the pivot pin 31 is horizontal for overcoming gravity induced side bias on body 20. It is to be understood that other circuit arrangements can be envisaged for producing similar changes in control of the torque and side bias forces.

## Claims

1. A rotatable work tool assembly comprising
   a rotatable body (10),
   a fixed holder (15) for said body,
   a work tool (22) mounted on said body
   a pivot pin (21) extending from said holder, and
   a recess (20A) within said body adapted to receive said pivot pin so that said body can rotate about said pivot pin relative to said holder and said work tool can move into a selected work position,
   characterised in that
   said assembly comprises biasing means for applying a biasing force to said body in a direction along a line (33) extending from the axis of said pivot pin to said work tool for all positions of said body as it rotates so as to tend to prevent any movement of said body relative to said pivot pin along said line (33) due to spacing between the outer surface of said pivot pin and the inner surface of said recess.

2. An assembly as claimed in Claim 1 characterised in that said biasing means comprises
   a fixed magnet structure (28) on said holder,
   at least one electrical coil (26) on said body, and
   a current generator (52, 55, 56, 57) for generating a bias force current (42, 43) for passing through said coil (26) so as to produce a magnetic field which co-operates with said fixed magnet structure to provide said biasing force (32).

3. An assembly as claimed in Claim 2 characterised in that said current generator also generates a rotational force current (40, 41) for passing through said coil (26) so as to produce a further magnetic field which co-operates with said fixed magnet structure (28) to provide a force (36, 37) for controlling the rotation of said body relative to said holder.

4. An assembly as claimed in Claim 3 characterised in that said coil (26) is in two parts (26C, 26CC) and said bias force current and said rotational force current pass through one part of the coil when the body is rotated in one direction and said bias force current and said rotational force current pass through the other part of the coil when the body is rotated in the opposite direction.

5. An assembly as claimed in Claim 2 characterised in that said coil is formed in two parts (26, 61) and said bias force current is passed through one part (61) of the coil and said rotational force current is passed through the other (26) of the coil.

FIG. 2

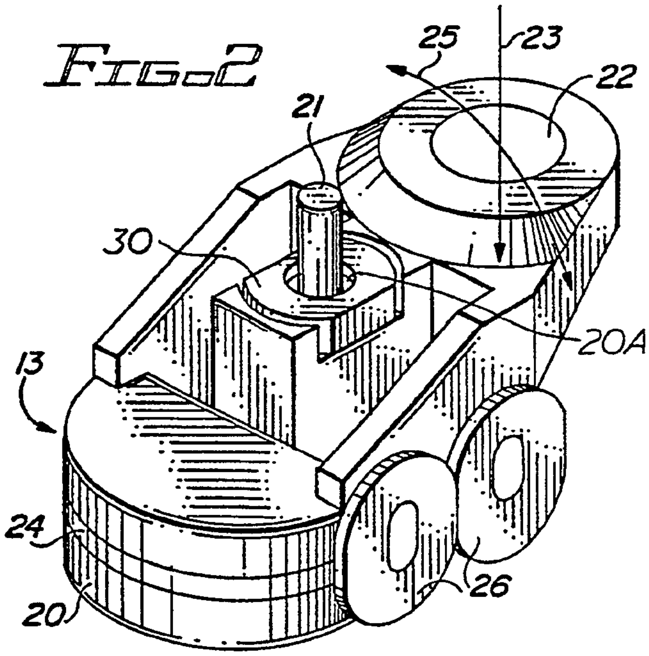


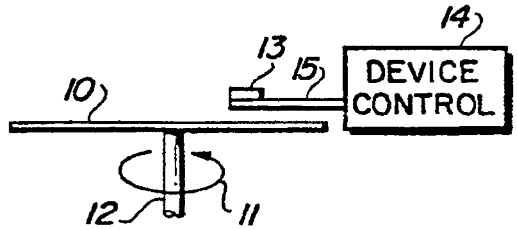


FIG. 1

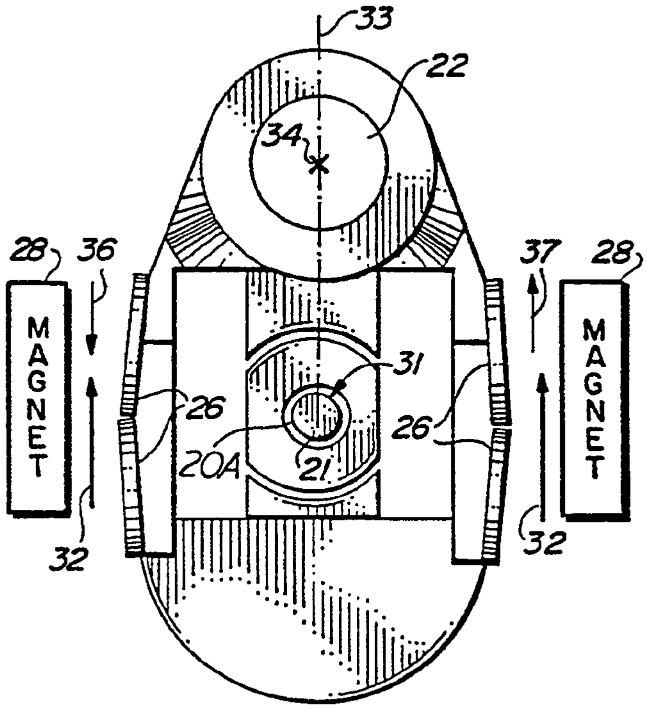


FIG. 3

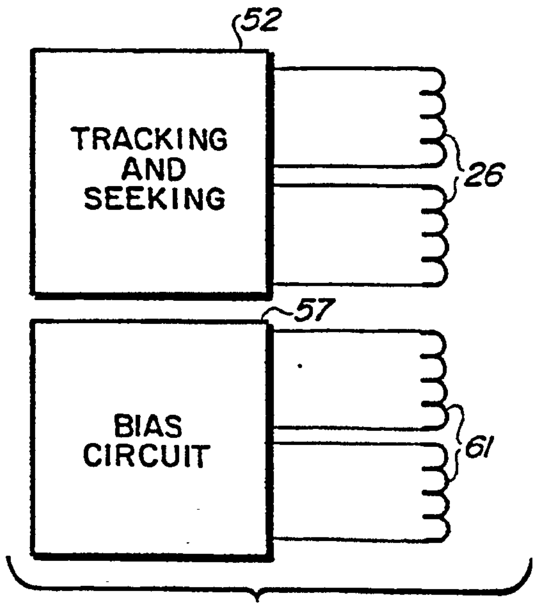


FIG. 5

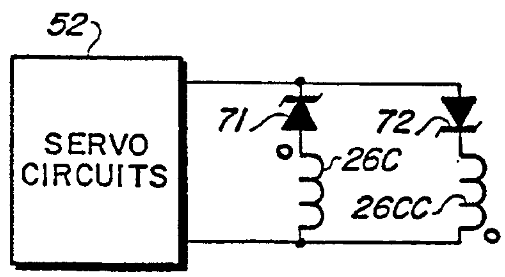


FIG. 7

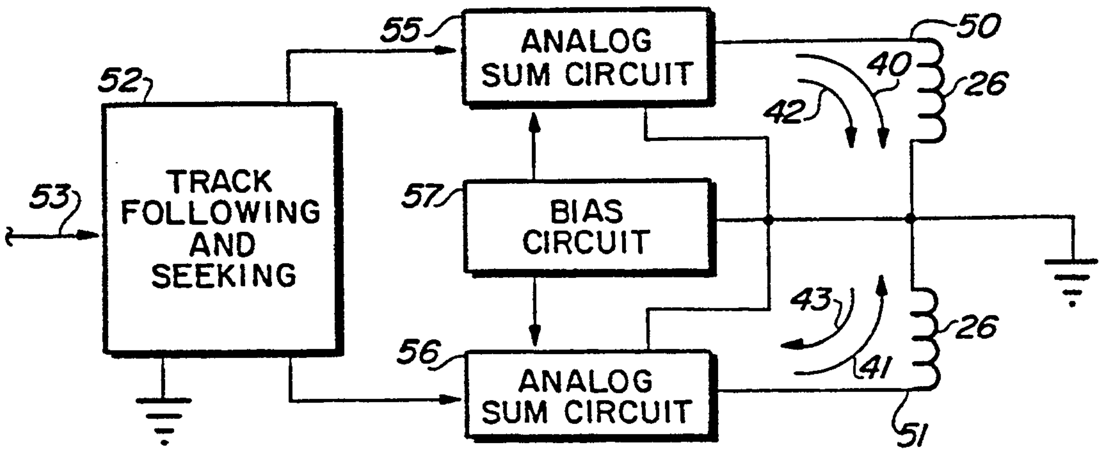
50
40
26
42
55
ANALOG SUM CIRCUIT
52
TRACK FOLLOWING AND SEEKING
53
57
BIAS CIRCUIT
43
26
56
ANALOG SUM CIRCUIT
41
51

FIG. 4

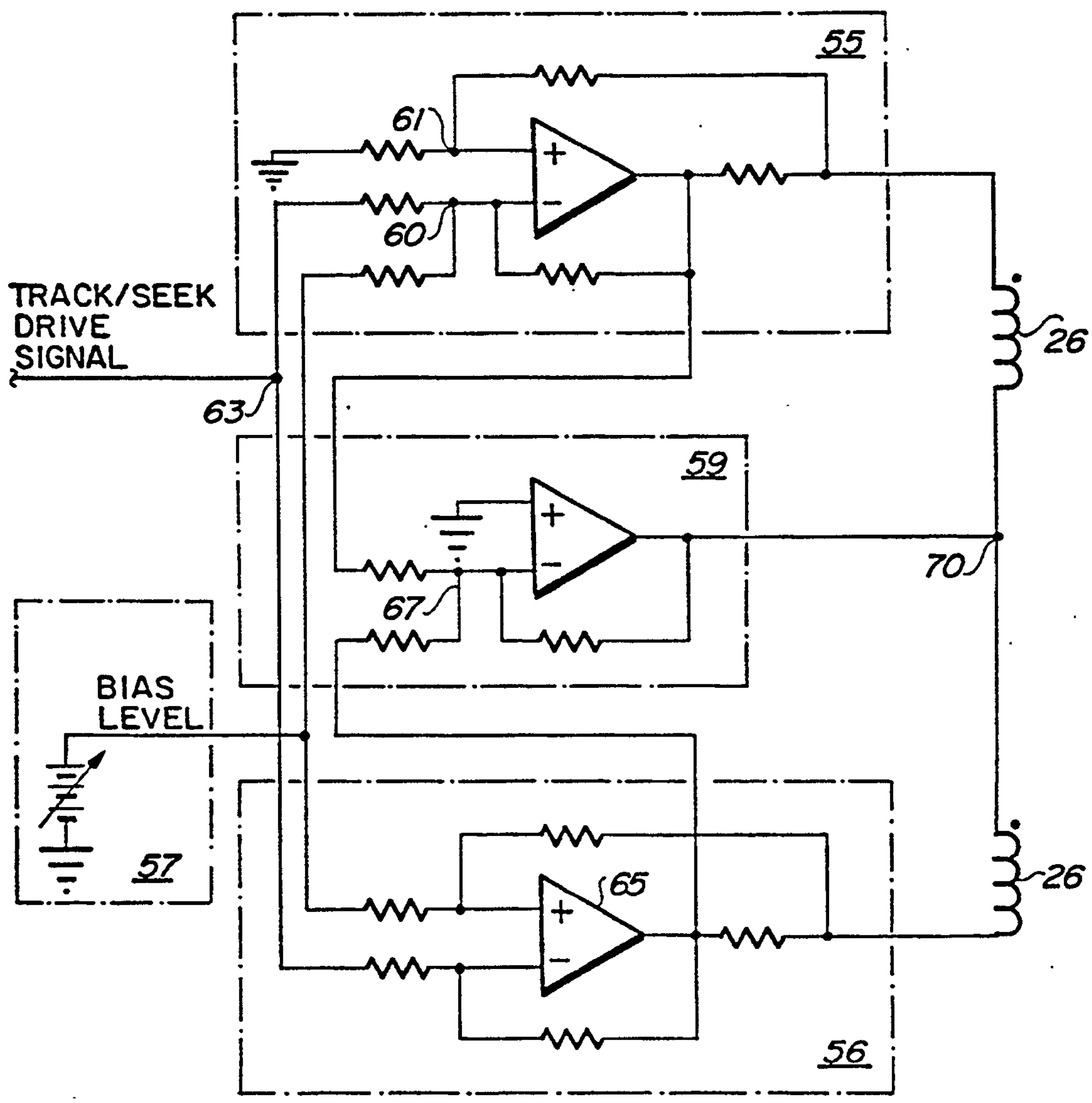
55
61
60
TRACK/SEEK DRIVE SIGNAL
63
26
59
70
67
BIAS LEVEL
57
65
26
56

FIG. 6

European Patent Office

# EUROPEAN SEARCH REPORT

Application Number
EP 91304864.1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,A | US - A - 4 862 441 (YUMURA et al.) * Fig. 2; abstract * -- | 1-5 | G 11 B 7/095<br>G 11 B 7/09<br>G 11 B 7/00 |
| A | EP - A2 - 0 287 285 (PIONEER ELECTRONIC CORPORATION) * Fig. 1-6; claims 1-10 * -- | 1-5 | |
| A | PATENT ABSTRACTS OF JAPAN, unexamined applications, P field, vol. 10, no. 312, October 23, 1986 THE PATENT OFFICE JAPANESE GOVERNMENT page 69 P 509 * Kokai-no. 123 030 (MATSU-SHITA ELECTRIC IND CO LTD) * ---- | 1-5 | |
| | | | TECHNICAL FIELDS SEARCHED (Int. Cl.5) |
| | | | G 11 B 7/00<br>G 02 B 7/00 |

The present search report has been drawn up for all claims

| Place of search | Date of completion of the search | Examiner |
|---|---|---|
| VIENNA | 05-09-1991 | BERGER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)